# EUROPEAN PATENT SPECIFICATION

(11) **EP 1 443 279 B1**
(45) Date of publication and mention of the grant of the patent: **04.04.2007**
(21) Application number: 03292762.6
(22) Date of filing: 04.11.2003
(51) Int. Cl.: F24F 3/14, F24F 11/00

(54) **Dehumidification method of an air conditioner**
Entfeuchtungsverfahren einer Klimaanlage
Procede de deshumidification d'un appareil de climatisation

(30) Priority: 30.01.2003 KR 2003006086
(43) Date of publication of application: 04.08.2004
(73) Proprietor: LG Electronics Inc., Yongdungpo-gu Seoul (KR)
(72) Inventor: Choi, Ho Seon, Seoul (KR); Lee, Gi Seop, Incheon-si (KR); Yum, Kwan Ho, Seoul (KR); Ryu, Yun Ho, Seoul (KR); Huh, Deok, Bucheon-si, Gyeonggi-do (KR); Oh, Il Kwon, c/o 116-1307 Doosan Apt., Seoul (KR)
(74) Representative: Pichat, Thierry

(56) References cited:
- EP-A- 0 893 657
- US-A- 4 744 223
- US-A- 4 813 474
- US-A- 5 062 276
- US-A- 5 345 776
- US-A- 5 353 862
- PATENT ABSTRACTS OF JAPAN vol. 006, no. 184 (M-157), 21 September 1982 (1982-09-21) & JP 57 092635 A (TOSHIBA CORP), 9 June 1982 (1982-06-09)
- PATENT ABSTRACTS OF JAPAN vol. 010, no. 006 (M-445), 11 January 1986 (1986-01-11) & JP 60 169039 A (MITSUBISHI JUKOGYO KK), 2 September 1985 (1985-09-02)
- PATENT ABSTRACTS OF JAPAN vol. 008, no. 124 (M-301), 9 June 1984 (1984-06-09) & JP 59 027145 A (TOKYO SHIBAURA DENKI KK), 13 February 1984 (1984-02-13)

## Description

### BACKGROUND OF THE INVENTION

### Field of the Invention

The present invention relates to a health dehumidification operation method of an air conditioner, and more particularly to a health dehumidification operation method of an air conditioner, in which the compressor frequency is determined according to the humidity difference between a set humidity and the indoor humidity and the revolution rate of an outdoor fan is adjusted to maintain the temperature uniformity, thereby facilitating physiological adaptation to the dehumidification at a uniform temperature and also enabling to perform the dehumidification operation without injuring the health of users including old or feeble person.

### Description of the Related Art

In general, an air conditioner provided with a dehumidification function is aimed to remove moisture by arranging a first heat exchanger functioning as a condenser and a second heat exchanger functioning as an evaporator in an indoor heat exchanger unit which is disposed indoors.

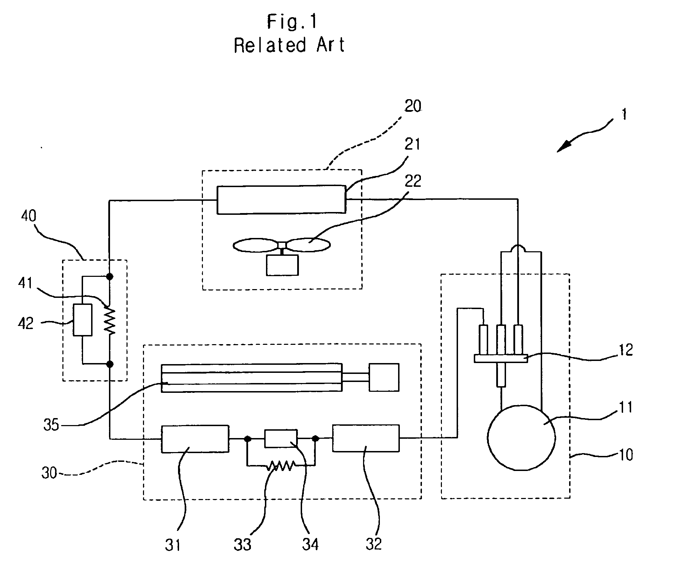

FIG. 1 schematically shows a conventional air conditioner 1.

As shown in FIG. 1, a conventional air conditioner with a dehumidification function includes a compressor unit 10 for compressing coolant, an outdoor heat exchanger unit 20, an indoor heat exchanger unit 30 and an expansion unit 40 disposed between the outdoor heat exchanger unit 20 and the indoor heat exchanger unit 30. The outdoor heat exchanger unit 20 has a heat exchanger 21 and a fan 22 to enable heat exchange between coolant and outdoor air. The indoor heat exchanger unit 30 has a first heat exchanger 31, a second heat exchanger 32 and indoor expanders 33 and 34 disposed between the first and the second heat exchangers 31 and 32.

In more detail, the compressor unit 10 has a compressor 11 for converting low temperature and pressure gas coolant dispensed from the outdoor heat exchanger unit 20 or the indoor heat exchanger unit 30 into high temperature and pressure gas coolant, and a four-way valve 12 for regulating the dispensing direction of the compressor 11.

The four-way valve 12 switches suction and exhaust ducts of the compressor 11 so that the indoor heat exchanger unit 30 may operate as an evaporator in the event of cooling the indoor or as a condenser in the event of heating the indoor.

At this time, the outdoor heat exchanger unit 20 naturally operates as the condenser or the evaporator correspondingly.

However, since description of the invention will be mainly made to the air conditioner as a dehumidifier, hereinafter it is assumed that the outdoor heat exchanger 20 operates as the condenser whereas the indoor heat exchanger 30 operates as the evaporator.

The outdoor heat exchanger unit 20 serves to convert high temperature and pressure gas coolant generated in the compressor unit 10 into middle temperature and high pressure liquid coolant, and is equipped with the condenser 21 and the fan 22 to this end.

The expansion unit 40 is means for converting middle temperature-high pressure liquid coolant dispensed from the outdoor heat exchanger unit 20 into low temperature-pressure liquid coolant. The expansion unit 40 includes a capillary 41 and a first valve 42 disposed parallel with the capillary 41 for regulating flow of liquid coolant through the capillary 41. When the air conditioner operates as a dehumidifier, it is necessary to control the pass of the coolant through the capillary 41 such that the expansion cycle in the expansion unit 40 does not occur. At this time, the first valve 42 is opened such that the liquid coolant passes through the first valve 42, so that the expansion unit 40 will not perform an expansion cycle.

As the expansion cycle is not performed as above, middle temperature-high pressure coolant is introduced into the indoor heat exchanger unit 30. Then, since the indoor heat exchanger unit 30 includes the first heat exchanger 31, the second heat exchanger 32 and the indoor expanders 33 and 34 between the first and second heat exchangers 31 and 32, the first heat exchanger 31 performs a condensing action once more while the indoor expander 33 performs the expansion cycle.

Through the above expansion cycle, middle temperature-high pressure liquid coolant is converted into low temperature-pressure liquid coolant, and the converted low temperature-pressure liquid coolant in the second heat exchanger 32 absorbs surrounding heat to be evaporated into low temperature-pressure gas coolant and the evaporated low temperature-pressure gas coolant is then introduced into the compressor unit 10.

If the air conditioner operates as a cooler instead of the dehumidifier, the expansion unit 40 performs the expansion cycle and the first heat exchanger 31 operates as an evaporator like the second heat exchanger 32. At this time, of course, the second valve 34 of the indoor expander 33 is opened to disable the indoor expander 33.

Hereinafter, an operation of the conventional air conditioner 1 with a dehumidification function will be described in brief.

In the second heat exchanger 32, as the temperature drops owing to evaporation of coolant, ambient moisture is condensed. Thus condensed moisture is discharged to the outside to carry out the dehumidification operation. Of course, since the indoor temperature is also cooled in the above process, the first heat exchanger 31 operates as a condenser to have temperature balance, thereby preventing the indoor temperature from dropping.

The conventional air conditioner rapidly performs the dehumidification operation according to the humidity difference between the set humidity and the indoor humidity and/or any outdoor load. As a result, the dehumidification operation may cause harmful effects to the health of children and/or old and feeble person who are more or less physiologically handicapped in adapting themselves to change of atmosphere.
[0015a] Further, from US-A 5 345 776, is disclosed a conventional power saving dehumidification operation method of an air conditioner, according which the frequency of a compressor is determined and the revolution rate of an outdoor fan is adjusted.

### SUMMARY OF THE INVENTION

Accordingly, the present invention is directed to a health dehumidification operation method of an air conditioner that substantially obviates one or more problems due to limitations and disadvantages of the related art.

An object of the present invention is to provide a health dehumidification operation method of an air conditioner, in which the revolution rate of an indoor fan is set to a low mode, the compressor frequency is determined according to the humidity difference between a set humidity and the indoor humidity and the revolution rate of an outdoor fan is adjusted to maintain the temperature uniformity, thereby facilitating physiological adaptation to the dehumidification at a uniform temperature and also enabling to perform the dehumidification operation without injuring the health of users including old or feeble person.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, the health dehumidification operation method as provided according to the present invention comprises the steps of: (a) detecting an indoor humidity by an indoor humidity sensor installed in the air conditioner and comparing the detected indoor humidity with a set humidity (which is set by a controller including a remote controller) to obtain a humidity difference between the detected indoor humidity and the set humidity; (b) setting an indoor fan in an indoor heat exchanger unit to a low mode; (c) setting the frequency of a compressor via a compressor-operating algorithm according to the humidity difference between the detected indoor humidity and the set humidity obtained in the step (a); (d) detecting an indoor temperature by an indoor temperature sensor installed in the air conditioner, and setting the revolution rate of an outdoor fan via an outdoor fan-operating algorithm so as to maintain the indoor temperature uniform; and (e) operating the indoor and outdoor fans and the compressor according to the revolution rates and the frequency set in the steps (b) to (d), whereby an indoor dehumidification operation is continuously performed and said uniform indoor temperature is maintained in a good condition so that a user can feel a good indoor environment.

The operating method of the invention may further comprise the step of: (f) continuously judging whether the indoor humidity exists in a comfortable range and whether the indoor temperature is maintained uniform so as to maintain the indoor dehumidification and uniform indoor temperature in the comfortable region state, and repeating the steps (a) to (e) until the indoor humidity exists in the comfortable range and the uniform indoor temperature is satisfied.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:

FIG. 1 schematically shows a conventional air conditioner;

FIG. 2 is a flowchart illustrating a health dehumidification operation method of an air conditioner according to the invention;

FIG. 3 is a flowchart for setting the compressor frequency via dehumidifying ability judgment in the health dehumidification operation method of an air conditioner according to the invention; and

FIG. 4 is a flowchart for setting the revolution rate of an outdoor fan via judgment uniform temperature judgment in the health dehumidification operation method of an air conditioner according to the invention.

### DETAILED DESCRIPTION OF THE PREFERRED EMBODIMENT

Reference will now be made in detail to the preferred embodiments of the present invention, examples of which are illustrated in the accompanying drawings.

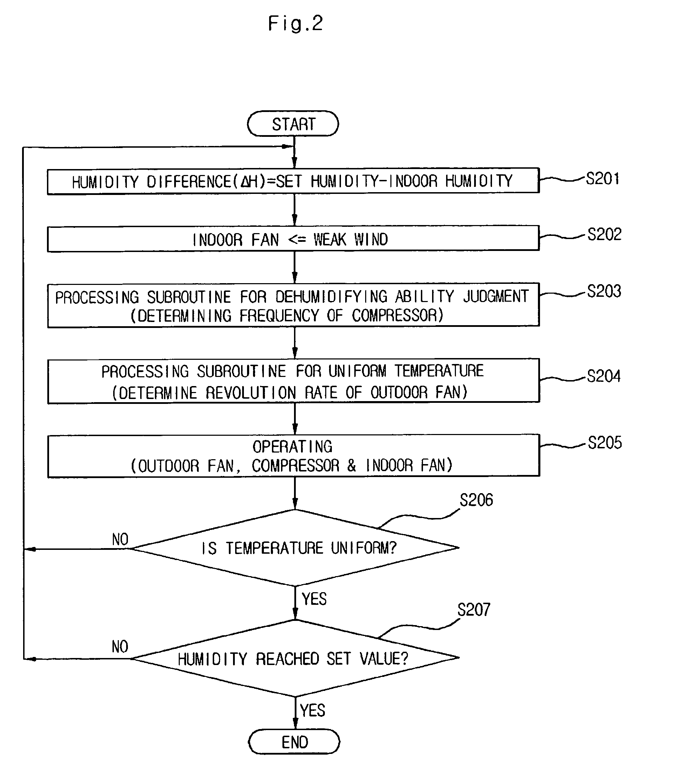

Fig. 2 is a flowchart illustrating a health dehumidification operation method of an air conditioner according to the invention.

The health dehumidification operation method of an air conditioner according to the invention comprises the steps of: (a) detecting an indoor humidity by an indoor humidity sensor installed in the air conditioner and comparing the detected indoor humidity with a set humidity (which is set by a controller including a remote controller) to obtain a humidity difference between the detected indoor humidity and the set humidity; (b) setting an indoor fan in an indoor heat exchanger unit to a low mode; (c) setting the frequency of a compressor via a compressor-operating algorithm according to the humidity difference between the detected indoor humidity and the set humidity obtained in the step (a); (d) detecting an indoor temperature by an indoor temperature sensor installed in the air conditioner, and setting the revolution rate of an outdoor fan via an outdoor fan-operating algorithm so as to maintain the detected indoor temperature; and (e) operating the indoor and outdoor fans and the compressor according to the revolution rates and the frequency set in the steps (b) to (d), whereby an indoor dehumidification operation is continuously performed and a uniform indoor temperature is maintained in a good condition so that a user can feel a good indoor environment.

The controlled dehumidification method of the invention further comprises: continuously judging whether the indoor humidity exists in a comfortable range and the indoor temperature is maintained uniform, and if not, repeating the steps (a) to (e) until the indoor humidity exists in the comfortable range and the indoor temperature is maintained uniform.

Referring to Fig. 2, in an indoor dehumidification operation via the air conditioner 1 (Fig. 1), the indoor humidity is detected by an indoor humidity sensor in the air conditioner 1. The thus detected indoor humidity is compared with a set humidity (i.e., humidity which is set by a controller such as a remote controller) to obtain the humidity difference (S201).

The indoor fan 35 in the indoor heat exchanger unit 30 is set to operate in a low mode (S202).

Next, a sub-routine operation for judging dehumidifying ability is carried out (S203). In the sub-routine operation, the frequency of the compressor 11 is set via a compressor-operating algorithm according to the obtained humidity difference between the indoor humidify and the set humidify.

After setting the frequency of the compressor 11, the revolution rate of the outdoor fan 22 is set by a sub-routine operation for uniform temperature (S204).

After the frequency of the compressor 11 and the revolution rate of the indoor fan 35 and the revolution rate and outdoor fan 22 are set through the preceding steps S202 to S204, the compressor 11, the indoor fan 35 and the outdoor fan 22 are actuated to consecutively maintain an indoor dehumidification operation at a uniform temperature in a comfortable atmosphere mode so that a user can feel a comfortable indoor atmosphere as well as readily have physiological adaptation to the dehumidification operation at the uniform temperature (S205).

Then, it is judged whether the temperature is maintained uniformly (S206). If the temperature is maintained uniformly, it is judged whether the humidity reaches the set humidity (S207).

However, if the temperature is not maintained uniformly, the preceding steps S201 to S205 are repeated until the temperature is maintained uniformly.

Also, it is judged whether the humidity reaches a set value (S207). If the humidity does not reach the set value, the preceding steps S201 to S205 are repeated until the humidity reaches the set value.

According to the invention as set forth above, the outdoor fan and the compressor are operated to achieve objects of the uniform indoor temperature and the indoor dehumidification, and then the uniform indoor temperature and the indoor dehumidification are confirmed via a feedback system. If both the uniform indoor temperature and the indoor dehumidification are satisfied, the health dehumidification operation method of an air conditioner according to the invention is completed.

Further, the revolution rate of the indoor fan 35 is set to maintain the "low mode" during the health dehumidification operation from an initial stage in which the health dehumidification is selected and performed.

Hereinafter, there will be described in detail the health dehumidification operation method of an air conditioner according to the invention.

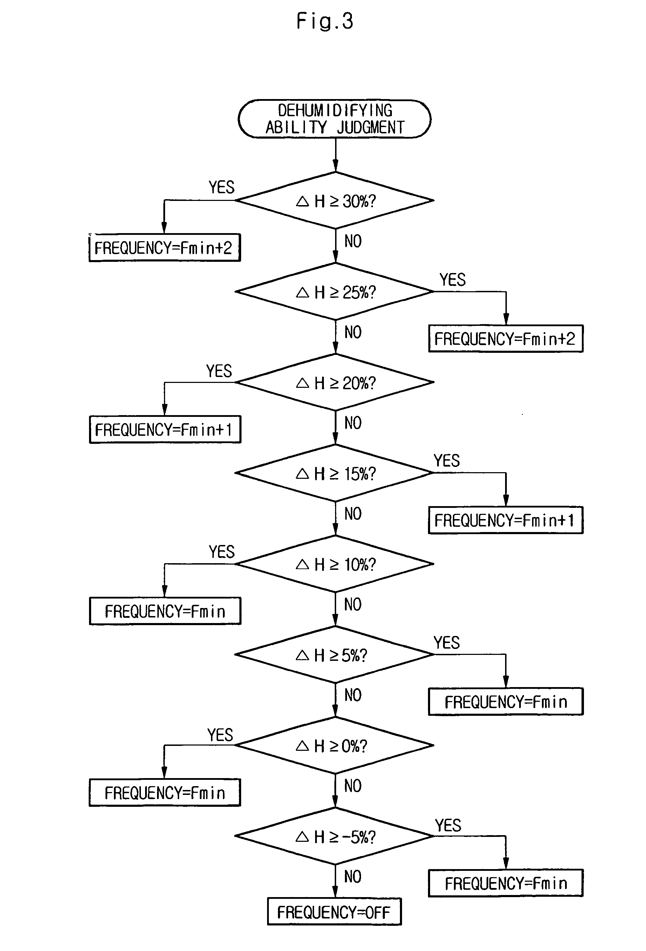

FIG. 3 is a flowchart of a compressor-operating algorithm for setting the frequency of the compressor as a method of judging dehumidification ability in the health dehumidification operation method of an air conditioner of the invention.

The compressor-operating algorithm includes: a first step of detecting the indoor humidity by the indoor humidity sensor (not shown) installed in the air conditioner 1 and comparing the detected indoor humidity with the set humidity (which is set by a controller such as a remote controller) to obtain the humidity difference between the detected indoor humidity and the set humidity; a second step of comparing the humidity difference obtained in the first step with the set humidity to obtain a fraction of the humidity difference with respect to the set humidity; and a third step of setting the frequency of the compressor 11 corresponding to the fraction of the humidity difference (indoor humidity - set humidity) obtained in the second step.

The compressor-operating algorithm will be described in comparison with Table 1 as follows.

Table 1 reports a situation in which the frequency of the compressor 11 is adjustably controlled according to the humidity difference obtained through comparison between the indoor humidity and the set humidity (i.e., humidity set by a controller such as a remote controller) using the compressor-operating algorithm, in which ΔH is the humidity difference between the indoor humidity and the set humidity, and F is the rotation frequency of the compressor.

**Table 1**

| COMP | F |
|---|---|
| (Dehumidification Ability) | |
| H | F |
| H≥30% | Fₘᵢₙ₊₂ |
| 25%≤H≤29% | Fₘᵢₙ₊₂ |
| 20%≤ H≤24% | Fₘᵢₙ₊₁ |
| 15%≤H≤19% | Fₘᵢₙ₊₁ |
| 10%≤H≤14% | Fₘᵢₙ |
| 5%≤H≤9% | Fₘᵢₙ |
| 0%≤H≤4% | Fₘᵢₙ |
| -5%≤ H≤-1% | Fₘᵢₙ |
| H≤-6% | OFF |

Further, referring to Table 1 and FIG. 3, hereinafter detailed description will present the compressor-operating algorithm for adjustably controlling the frequency of the compressor 11 according to the humidity difference (set humidity - indoor humidity) obtained through comparison between the indoor humidity and the set humidity.

First, when the humidity difference ΔH is -6% or less, the compressor frequency is set 0 (OFF). When ΔH is greater than or equal to -5 and less than or equal to 14%, the compressor frequency is set to a minimum compressor frequency Fₘᵢₙ. When ΔH is greater than or equal to 15 and less than or equal to 24%, the compressor frequency is set to a compressor frequency Fₘᵢₙ₊₁ which is one step raised from the minimum compressor frequency Fₘᵢₙ. Where ΔH is 25% or more, the compressor frequency is set to a compressor frequency Fₘᵢₙ₊₂ which is one step raised from the compressor frequency Fₘᵢₙ₊₁.

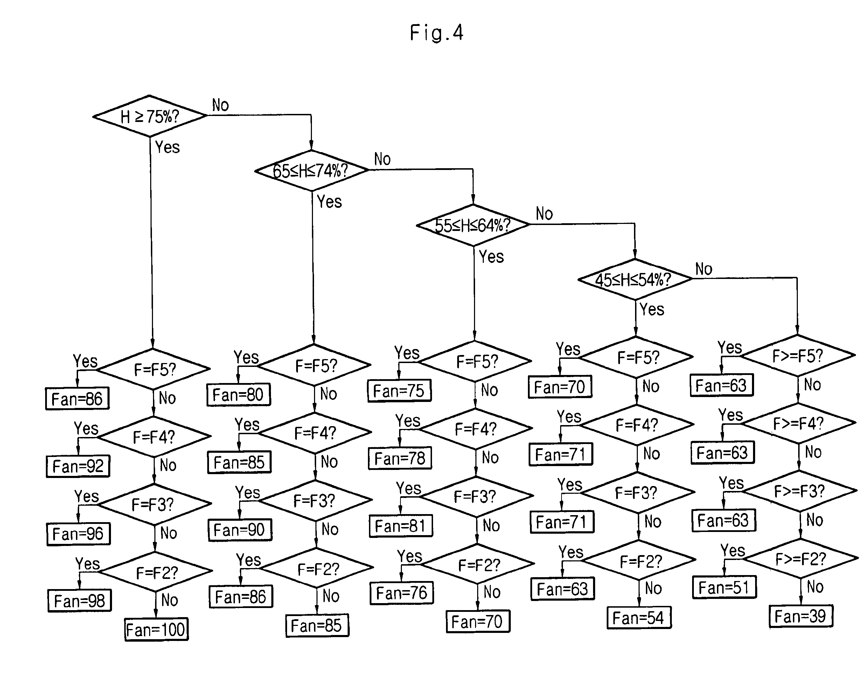

FIG. 4 is a flowchart of an outdoor fan-operating algorithm for setting the revolution rate of an outdoor fan via uniform temperature judgment in the health dehumidification operation method of an air conditioner according to the invention.

As shown in FIGs. 2 and 4, the outdoor fan-operating algorithm includes: a first step of comparing the frequency of the compressor 11 adjustably controlled via the compressor-operating algorithm with the indoor humidity detected by the indoor humidity sensor installed in the air conditioner 1; and a second step of setting the revolution rate of the outdoor fan 22 in proportion with the adjustably controlled frequency of the compressor 11, whereby the indoor dehumidification operation can be performed in a comfortable condition via the adjustably controlled frequency of the compressor 11.

The outdoor fan-operating algorithm will be described in comparison with Table 2 as follows.

Table 2 reports a situation in which the revolution rate of the outdoor fan is adjustably controlled via the outdoor fan-operating algorithm according to the frequency and the indoor humidity of the compressor 11 set in Table 1.

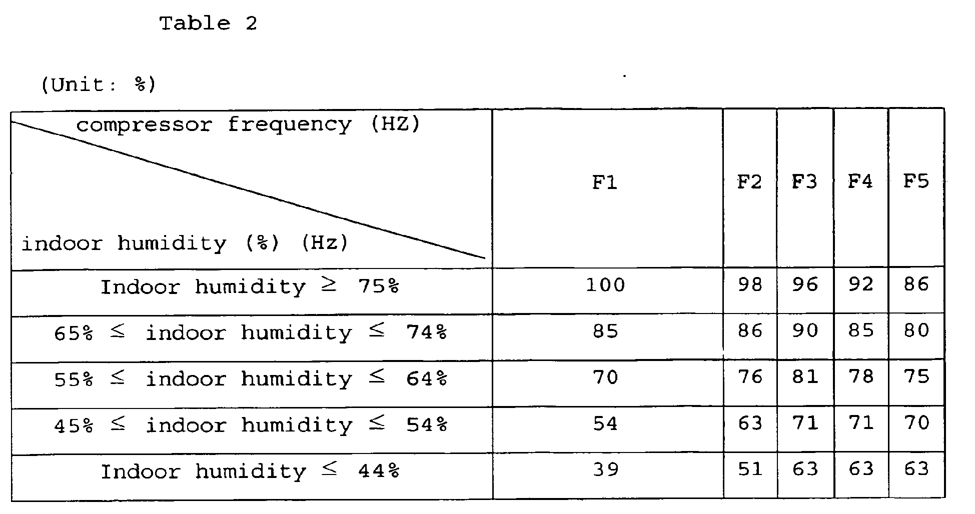

Further, referring to Table 2 and Fig. 4, there will be described in detail there will be described the outdoor fan-operating algorithm in which the revolution rate of the outdoor fan is variably controlled depending on the indoor frequency and the frequency of the compressor 11 set in Table 1.

First, it is referenced that when the indoor humidity H is about 75% or more and the frequency H of the compressor 11 set in Table 1 is F1, the revolution rate of the outdoor fan is set to 100%. When the indoor humidity is about 75% or more and the compressor frequency H set in Table 1 is F2, the revolution rate of the outdoor fan is set to 98%. When the compressor frequency is F3, the revolution rate of the outdoor fan is set to 96%. When the compressor frequency is F4, the revolution rate of the outdoor fan is set to 92%. Also, when the compressor frequency is F5, the revolution rate of the outdoor fan is set to 86%.

When the indoor humidity is greater than or equal to 65% and less than or equal to 74% and the compressor frequency H set in Table 1 is F1, the revolution rate of the outdoor fan is 85%. When the compressor frequency H is F2, the revolution rate of the outdoor fan is 86%. When the compressor frequency is F3, the revolution rate of the outdoor fan is 90%. When the compressor frequency is F4, the revolution rate of the outdoor fan is 85%. Also, when the compressor frequency is F5, the revolution rate of the outdoor fan is 80%.

Also, when the indoor humidity is greater than or equal to 55% and less than or equal to 64% and the frequency of the compressor set in Table 1 is F1, the revolution rate of the outdoor fan is 70%. When the frequency of the compressor is F2, the revolution rate of the outdoor fan is 76%. When the frequency of the compressor is F3, the revolution rate of the outdoor fan is 78%. Also, when the frequency of the compressor is F5, the revolution rate of the outdoor fan is 75%.

When the indoor humidity is greater than or equal to 45% and less than or equal to 54% and the frequency of the compressor set in Table 1 is F1, the revolution rate of the outdoor fan is 54%. When the frequency of the compressor is F2, the revolution rate of the outdoor fan is 63%. When the frequency of the compressor is F3, the revolution rate of the outdoor fan is 71%. When the frequency of the compressor is F4, the revolution rate of the outdoor fan is 71%. Also, when the frequency of the compressor is F5, the revolution rate of the outdoor fan is 70%.

Also, when the indoor humidity is 44% or less and the frequency of the compressor set in Table 1 is F1, the revolution rate of the outdoor fan is 39%. When the frequency of the compressor is F2, the revolution rate of the outdoor fan is 51%. When the frequency of the compressor is F3, the revolution rate of the outdoor fan is 63%. When the frequency of the compressor is F4, the revolution rate of the outdoor fan is 63%. Also, when the frequency of the compressor is F5, the revolution rate of the outdoor fan is 63%. In this way, the outdoor fan is set to various revolution rates corresponding to each humidity difference of the compressor.

Hereinafter, the health dehumidification operation method of an air conditioner will be described in detail as follows:

In order to continuously maintain the indoor dehumidification operation in a comfortable condition where the user can feel comfortable indoor atmosphere, the process is controlled as follows: The revolution rate of the indoor fan 35 in the indoor heat exchanger unit 30 is set to the "low mode". The indoor humidity is compared with the reference humidity difference in the air conditioner 1, in which the indoor humidity is detected by an indoor humidity sensor (not shown) in the air conditioner, the detected indoor humidity is compared with the set humidity (i.e., set by a controller such as a remote controller) and the difference between the indoor humidity and the set humidity is obtained. Then, the humidity difference between the indoor humidity and the set humidity is compared with the reference humidity difference in the air conditioner 1 to set the frequency of the compressor 11 corresponding to the humidity difference (indoor humidity - set humidity).

Also, by comparing the humidity difference between the indoor humidity and the set humidity with the frequency of the compressor 11 corresponding to the humidity difference (indoor humidity - set humidity), the revolution rate of the outdoor fan 22 is set via the outdoor fan-operating algorithm so as to maintain or keep the indoor temperature uniform so that the indoor dehumidification operation be performed in a comfortable condition.

By driving the outdoor and indoor fans 22 and 35 and the compressor 11 set, respectively, to the revolution rates and the frequency, the indoor dehumidification operation is performed in the comfortable condition where the user can feel a comfortable indoor atmosphere. Also, the above steps are repeatedly carried out by continuously judging whether the indoor humidity exists in a comfortable range.

As set forth above, the health dehumidification operation method of an air conditioner of the present invention optimizes the operation of the compressor, the indoor fan and the outdoor fan in response to the outdoor load in the air conditioner.

Furthermore, the present invention facilitates physiological adaptation during uniform temperature dehumidification, thereby reliably performing the dehumidification operation without causing any harmful effect to the health of the user including old or feeble person.

It will be apparent to those skilled in the art that various modifications and variations can be made in the present invention. Thus, it is intended that the present invention covers the modifications and variations of this invention provided they come within the scope of the appended claims and their equivalents.

## Claims

1. A health dehumidification operation method of an air conditioner (1), the method comprising the steps of determining a frequency of a compressor (11) and adjusting the revolution rate of an outdoor fan (22), **characterized in that** it further comprises the steps of:
(a) detecting an indoor humidity by an indoor humidity sensor installed in the air conditioner (1) and comparing the detected indoor humidity with a set humidity to obtain a humidity difference (ΔH) between the detected indoor humidity and the set humidity;
(b) setting an indoor fan (35) in an indoor heat exchanger unit to a low mode;
(c) setting said frequency of the compressor (11) via a compressor-operating algorithm according to the humidity difference (ΔH) between the detected indoor humidity and the set humidity obtained in the step (a);
(d) detecting an indoor temperature by an indoor temperature sensor installed in the air conditioner (1), and setting the revolution rate of an outdoor fan (22) via an outdoor fan-operating algorithm as to maintain the indoor temperature uniform ; and
(e) operating the indoor (35) and outdoor (22) fans and the compressor (11) according to the revolution rates and the frequency set in the steps (b) to (d), whereby an indoor dehumidification operation is continuously performed and said uniform indoor temperature is maintained.

2. The health dehumidification operation method according to claim 1, further comprising the step of: (f) continuously judging whether the indoor humidity exists in a comfortable range and whether the indoor temperature is maintained uniform so as to maintain the indoor dehumidification and uniform indoor temperature in the comfortable region state, and repeating the steps (a) to (e) until the indoor humidity exists in the comfortable range and the uniform indoor temperature is satisfied.

3. The health dehumidification operation method according to claim 1, wherein the compressor-operating algorithm comprises the steps of:
(i) detecting the indoor humidity by the indoor humidity sensor installed in the air conditioner and comparing the detected indoor humidity with the set humidity to obtain the humidity difference (ΔH) between the detected indoor humidity and the set humidity;
(ii) comparing the humidity difference obtained in the step (i) with a reference humidity difference (ΔH) set in the air conditioner; and
(iii) setting the frequency of the compressor (11) corresponding to the humidity difference (ΔH) (indoor humidity - set humidity) according to comparison in the step (ii).

4. The health dehumidification operation method according to claim 1, wherein the compressor-operating algorithm sets the frequency of the compressor (11) to 0 (OFF) if the humidity difference (ΔH) is -6% or less, to a minimum compressor frequency F min if the humidity difference is greater than or equal to -5% and less than or equal to 14%, to a first compressor frequency F min+1 which is one step raised from the minimum compressor frequency F min if the humidity difference (ΔH) is greater than or equal to 15% and less than or equal to 24%, and to a second compressor frequency F min+2 which is one step raised from the compressor frequency F min+1 if the humidity difference (ΔH) is 25% or more.

5. The health dehumidification operation method according to claim 1, wherein the outdoor fan-operating algorithm comprises the steps of:
(i) comparing the frequency of the compressor adjustably controlled via the compressor-operating algorithm with the indoor humidity detected by the indoor humidity sensor installed in the air conditioner (1); and
(ii) setting the revolution rate of the outdoor fan (22) in proportion with the adjustably controlled frequency of the compressor (11), whereby the indoor dehumidification operation can be performed in a comfortable condition via the adjustably controlled frequency of the compressor (11).

6. The health dehumidification operation method according to claim 1, wherein the outdoor fan-operating algorithm sets the revolution rate of the outdoor fan (22) to various values corresponding to the humidity difference (ΔH) of the compressor, by setting the revolution rate of the outdoor fan (22) to 100% as a reference where the indoor humidity is about 75% or more and if the frequency of the compressor (11) is set to F1, in which,
where the indoor humidity is about 75% or more, the revolution rate of the outdoor fan (22) is set to 98% if the compressor frequency is F2, the revolution rate of the outdoor fan (22) is set to 96% if the compressor frequency is F3, the revolution rate of the outdoor fan (22) is set to 92% if the compressor frequency is F4, and the revolution rate of the outdoor fan (22)is set to 86% if the compressor frequency is F5;
where the indoor humidity is greater than or equal to 65% and less than or equal to 74%, the revolution rate of the outdoor fan (22) is 85% if the compressor frequency is F1, the revolution rate of the outdoor fan (22) is 86% if the compressor frequency is F2, the revolution rate of the outdoor fan (22) is 90% if the compressor frequency is F3, the revolution rate of the outdoor fan (22) is 85% if the compressor frequency is F4, and the revolution rate of the outdoor fan (22) is 80% if the compressor frequency is F5;
where the indoor humidity is greater than or equal to 55% and less than or equal to 64%, the revolution rate of the outdoor fan (22) is 70% if the frequency of the compressor is F1, the revolution rate of the outdoor fan (22) is 76% if the frequency of the compressor is F2, the revolution rate of the outdoor fan (22) is 78% if the frequency of the compressor is F3, and the revolution rate of the outdoor fan (22) is 75% if the frequency of the compressor is F5;
where the indoor humidity is greater than or equal to 45% and less than or equal to 54%, the revolution rate of the outdoor fan (22) is 54% if the frequency of the compressor (11) is F1, the revolution rate of the outdoor fan (22) is 63% if the frequency of the compressor is F2, the revolution rate of the outdoor fan (22) is 71% if the frequency of the compressor (11) is F3, the revolution rate of the outdoor fan (22) is 71% if the frequency of the compressor (11) is F4, and the revolution rate of the outdoor fan (22) is 70% if the frequency of the compressor (11) is F5; and
where the indoor humidity is 44% or less, the revolution rate of the outdoor fan (22) is 39% if the frequency of the compressor (11) is F1, the revolution rate of the outdoor fan (22) is 51% if the frequency of the compressor (11) is F2, the revolution rate of the outdoor fan (22) is 63% if the frequency of the compressor (11) is F3, the revolution rate of the outdoor fan (22) is 63% if the frequency of the compressor (11) is F4, and the revolution rate of the outdoor fan (22) is 63% if the frequency of the compressor (11) is F5.

7. The health dehumidification operation method according to claim 1, comprising determining the frequency of the compressor (11) via the compressor-operating algorithm according to the humidity difference (ΔH) between the set humidity and the indoor humidity.

8. The health dehumidification operation method according to claim 1, comprising adjusting the revolution rate of the outdoor fan (22) via the outdoor fan-operating algorithm according to said temperature difference between the reference temperature and the indoor temperature.

9. The method according to claim 1, comprising setting the set humidity of step (a) by a controller including a remote controller.

10. The method according to claim 8, wherein the revolution rate of the indoor fan is set to maintain a "low mode" during the health dehumidification operation from an initial stage in which the health dehumidification operation is selected and performed.

## Patentansprüche

1. Verfahren zum Betrieb einer Klimaanlage (1) zur medizinischen Entfeuchtung, wobei das Verfahren die Schritte der Ermittlung einer Frequenz eines Kompressors (11) und Einstellung der Drehzahl eines Außenlüfters (22) umfaßt, **dadurch gekennzeichnet, daß** es ferner die Schritte umfaßt:
(a) Detektieren einer Innenfeuchtigkeit durch einen in der Klimaanlage (1) installierten Innenfeuchtigkeitssensor und Vergleichen der detektierten Innenfeuchtigkeit mit einer eingestellten Feuchtigkeit, um eine Feuchtigkeitsdifferenz (ΔH) zwischen der detektierten Innenfeuchtigkeit und der eingestellten Feuchtigkeit zu erhalten,
(b) Einstellen eines Innenlüfters (35) in einer Innenwärmetauschereinheit auf einen niedrigen Betrieb,
(c) Einstellen der Frequenz des Kompressors (11) über einen Kompressorbetriebsalgorithmus gemäß der in dem Schritt (a) erhaltenen Feuchtigkeitsdifferenz (ΔH) zwischen der detektierten Innenfeuchtigkeit und der eingestellten Feuchtigkeit,
(d) Detektieren einer Innentemperatur durch einen in der Klimaanlage (1) installierten Innentemperatursensor und Einstellen der Drehzahl eines Außenlüfters (22) über einen Außenlüfterbetriebsalgorithmus, um die Innentemperatur gleichmäßig zu halten, und
(e) Betreiben der Innen (35)- und Außen (22)-lüfter und des Kompressors (11) gemäß den in den Schritten (b) bis (d) eingestellten Drehzahlen und Frequenzen, wodurch ein Innenentfeuchtungsbetrieb kontinuierlich durchgeführt wird und die gleichmäßige Innentemperatur aufrechterhalten wird.

2. Verfahren zur medizinischen Entfeuchtung nach Anspruch 1, **dadurch gekennzeichnet, daß** es ferner die Schritte umfaßt: (f) kontinuierliches Beurteilen, ob die Innenfeuchtigkeit in einem angenehmen Bereich liegt und ob die Innentemperatur gleichmäßig gehalten wird, um die Innenentfeuchtung und die gleichmäßige Innentemperatur in dem angenehmen Bereich zu halten, und Wiederholen der Schritte (a) bis (e), bis die Innenfeuchtigkeit in dem angenehmen Bereich liegt und die gleichmäßige Innentemperatur erfüllt ist.

3. Verfahren zur medizinischen Entfeuchtung nach Anspruch 1, **dadurch gekennzeichnet, daß** der Kompressorbetriebsalgorithmus die Schritte umfaßt:
(i) Detektieren der Innenfeuchtigkeit durch einen in der Klimaanlage installierten Innenfeuchtigkeitssensor und Vergleichen der detektierten Innenfeuchtigkeit mit der eingestellten Feuchtigkeit, um die Feuchtigkeitsdifferenz (ΔH) zwischen der detektierten Innenfeuchtigkeit und der eingestellten Feuchtigkeit zu erhalten,
(ii) Vergleichen der in dem Schritt (i) erhaltenen Feuchtigkeitsdifferenz mit einer Referenzfeuchtigkeitsdifferenz (ΔH), die in der Klimaanlage eingestellt ist, und
(iii) Einstellen der Frequenz des Kompressors (11) entsprechend der Feuchtigkeitsdifferenz (ΔH) (Innenfeuchtigkeit - eingestellte Feuchtigkeit) gemäß dem Vergleich in Schritt (ii).

4. Verfahren zur medizinischen Entfeuchtung nach Anspruch 1, **dadurch gekennzeichnet, daß** der Kompressorbetriebsalgorithmus die Frequenz des Kompressors (11) auf 0 (AUS), wenn die Feuchtigkeitsdifferenz (ΔH) -6% oder weniger beträgt, auf eine minimale Kompressorfrequenz F min, wenn die Feuchtigkeitsdifferenz größer als oder gleich -5% und geringer als oder gleich 14% ist, auf eine erste Kompressorfrequenz F min+1, die gegenüber der minimalen Kompressorfrequenz F min um eine Stufe angehoben ist, wenn die Feuchtigkeitsdifferenz (ΔH) größer als oder gleich 15% und geringer als oder gleich 24% ist, und auf eine zweite Kompressorfrequenz F min+2, die gegenüber der Kompressorfrequenz F min+1 um eine Stufe angehoben ist, einstellt, wenn die Feuchtigkeitsdifferenz (ΔH) 25% oder mehr beträgt.

5. Verfahren zur medizinischen Entfeuchtung nach Anspruch 1, **dadurch gekennzeichnet, daß** der Außenlüfterbetriebsalgorithmus die Schritte umfaßt:
(i) Vergleichen der Frequenz des Kompressors, die über den Kompressorbetriebsalgorithmus einstellbar gesteuert wird, mit der von dem in der Klimaanlage (1) installierten Innenfeuchtigkeitssensor detektierten Innenfeuchtigkeit, und
(ii) Einstellen der Drehzahl des Außenlüfters (22) im Verhältnis zur einstellbar gesteuerten Frequenz des Kompressors (11), wodurch der Innenentfeuchtungsbetrieb in einem angenehmen Zustand über die einstellbar gesteuerte Frequenz des Kompressors (11) durchgeführt werden kann.

6. Verfahren zur medizinischen Entfeuchtung nach Anspruch 1, **dadurch gekennzeichnet, daß** der Außenlüfterbetriebsalgorithmus die Drehzahl des Außenlüfters (22) auf verschiedene Werte entsprechend der Feuchtigkeitsdifferenz (ΔH) des Kompressors durch Einstellen der Drehzahl des Außenlüfters (22) auf 100% als eine Referenz einstellt, bei der die Innenfeuchtigkeit ungefähr 75% oder mehr beträgt, und wenn die Frequenz des Kompressors (11) auf F1 eingestellt ist, in dem,
wenn die Innenfeuchtigkeit ungefähr 75% oder mehr beträgt, die Drehzahl des Außenlüfters (22) auf 98% eingestellt wird, wenn die Kompressorfrequenz F2 beträgt, die Drehzahl des Außenlüfters (22) auf 96% eingestellt wird, wenn die Kompressorfrequenz F3 beträgt, die Drehzahl des Außenlüfters (22) auf 92% eingestellt wird, wenn die Kompressorfrequenz F4 beträgt, und die Drehzahl des Außenlüfters (22) auf 86% eingestellt wird, wenn die Kompressorfrequenz F5 beträgt,
wenn die Innenfeuchtigkeit größer als oder gleich 65% oder weniger als oder gleich 74% ist, die Drehzahl des Außenlüfters (22) 85% beträgt, wenn die Kompressorfrequenz F1 beträgt, die Drehzahl des Außenlüfters (22) 86% beträgt, wenn die Kompressorfrequenz F2 beträgt, die Drehzahl des Außenlüfters (22) 90% beträgt, wenn die Kompressorfrequenz F3 beträgt, die Drehzahl des Außenlüfters (22) 85% beträgt, wenn die Kompressorfrequenz F4 beträgt, und die Drehzahl des Außenlüfters (22) 80% beträgt, wenn die Kompressorfrequenz F5 beträgt,
wenn die Innenfeuchtigkeit größer als oder gleich 55% und geringer als oder gleich 64% ist, die Drehzahl des Außenlüfters (22) 70% beträgt, wenn die Frequenz des Kompressors F1 beträgt, die Drehzahl des Außenlüfters (22) 76% beträgt, wenn die Frequenz des Kompressors F2 beträgt, die Drehzahl des Außenlüfters (22) 78% beträgt, wenn die Frequenz des Kompressors F3 beträgt, und die Drehzahl des Außenlüfters (22) 75% beträgt, wenn die Frequenz des Kompressors F5 beträgt,
wenn die Innenfeuchtigkeit größer als oder gleich 45% und weniger als oder gleich 54% ist, die Drehzahl des Außenlüfters (22) 54% beträgt, wenn die Frequenz des Kompressors (11) F1 beträgt, die Drehzahl des Außenlüfters (22) 63% beträgt, wenn die Frequenz des Kompressors F2 beträgt, die Drehzahl des Außenlüfters (22) 71% beträgt, wenn die Frequenz des Kompressors (11) F3 beträgt, die Drehzahl des Außenlüfters (22) 71% beträgt, wenn die Frequenz des Kompressors (11) F4 beträgt, und die Drehzahl des Außenlüfters (22) 70% beträgt, wenn die Frequenz des Kompressors (11) F5 beträgt,
wenn die Innenfeuchtigkeit 44% oder weniger beträgt, die Drehzahl des Außenlüfters (22) 39% beträgt, wenn die Frequenz des Kompressors (11) F1 beträgt, die Drehzahl des Außenlüfters (22) 51% beträgt, wenn die Frequenz des Kompressors (11) F2 beträgt, die Drehzahl des Außenlüfters (22) 63% beträgt, wenn die Frequenz des Kompressors (11) F3 beträgt, die Drehzahl des Außenlüfters (22) 63% beträgt, wenn die Frequenz des Kompressors (11) F4 beträgt, und die Drehzahl des Außenlüfters (22) 63% beträgt, wenn die Frequenz des Kompressors (11) F5 beträgt.

7. Verfahren zur medizinischen Entfeuchtung nach Anspruch 1, **dadurch gekennzeichnet, daß** es die Ermittlung der Frequenz des Kompressors (11) über den Kompressorbetriebsalgorithmus gemäß der Feuchtigkeitsdifferenz (ΔH) zwischen der eingestellten Feuchtigkeit und der Innenfeuchtigkeit umfaßt.

8. Verfahren zur medizinischen Entfeuchtung nach Anspruch 1, **dadurch gekennzeichnet, daß** es Einstellen der Drehzahl des Außenlüfters (22) über den Außenlüfterbetriebsalgorithmus gemäß der Temperaturdifferenz zwischen der Referenztemperatur und der Innentemperatur umfaßt.

9. Verfahren nach Anspruch 1, **dadurch gekennzeichnet, daß** es Einstellen der eingestellten Feuchtigkeit von Schritt (a) durch eine Steuerung umfaßt, die eine Fernsteuerung enthält.

10. Verfahren nach Anspruch 8, **dadurch gekennzeichnet, daß** die Drehzahl des Innenlüfters zum Aufrechterhalten eines "niedrigen Betriebs" während des medizinischen Entfeuchtungsbetriebs von einem Anfangszustand, in dem der medizinische Entfeuchtungsbetrieb ausgewählt und durchgeführt wird, eingestellt wird.

## Revendications

1. Procédé d'opération de déshumidification sanitaire d'un climatiseur (1), le procédé comprenant les étapes consistant à déterminer une fréquence d'un compresseur (11) et à régler la vitesse de rotation d'un ventilateur d'extérieur (22), **caractérisé en ce qu'**il comprend en outre les étapes consistant à :
(a) détecter une humidité à l'intérieur par un capteur d'humidité à l'intérieur dans le climatiseur (1) et comparer l'humidité à l'intérieur détectée à une humidité de consigne pour obtenir une différence d'humidité (ΔH) entre l'humidité à l'intérieur détectée et l'humidité de consigne ;
(b) régler un ventilateur d'intérieur (35) dans une unité d'échangeur de chaleur d'intérieur à un mode lent ;
(c) régler ladite fréquence du compresseur (11) via un algorithme de fonctionnement de compresseur en fonction de la différence d'humidité (ΔH) entre l'humidité à l'intérieur détectée et l'humidité de consigne obtenue à l'étape (a) ;
(d) détecter une température d'intérieur par un capteur de température à l'intérieur installé dans le climatiseur (1) et régler la vitesse de rotation d'un ventilateur d'extérieur (22) via un algorithme de fonctionnement de ventilateur d'extérieur de manière à maintenir uniforme la température à l'intérieur ; et
(e) faire fonctionner les ventilateurs d'intérieur (35) et d'extérieur (22) et le compresseur (11) en fonction des vitesses de rotation et de la fréquence réglées dans les étapes (b) à (d), moyennant quoi une opération de déshumidification d'intérieur est effectuée en continu et ladite température uniforme à l'intérieur est maintenue.

2. Procédé d'opération de déshumidification sanitaire selon la revendication 1, comprenant en outre l'étape consistant à : (f) juger en continu si l'humidité à l'intérieur se trouve dans une plage de confort de manière à maintenir la déshumidification à l'intérieur et la température uniforme à l'intérieur dans un état de région de confort et répéter les étapes (a) à (e) jusqu'à ce que l'humidité à l'intérieur se trouve dans la plage de confort et la température uniforme à l'intérieur soit satisfaite.

3. Procédé d'opération de déshumidification sanitaire selon la revendication 1, dans lequel l'algorithme de fonctionnement de compresseur comprend les étapes consistant à :
(i) détecter l'humidité à l'intérieur par le capteur d'humidité à l'intérieur installé dans le climatiseur et comparer l'humidité à l'intérieur détectée à l'humidité de consigne pour obtenir la différence d'humidité (ΔH) entre l'humidité à l'intérieur détectée et l'humidité de consigne ;
(ii) comparer la différence d'humidité obtenue à l'étape (i) avec une différence d'humidité de référence (ΔH) fixée dans le climatiseur ;
(iii) régler la fréquence du compresseur (11) correspondante à la différence d'humidité (ΔH) (humidité à l'intérieur - humidité de consigne) en fonction de la comparaison dans l'étape (ii).

4. Procédé d'opération de déshumidification sanitaire selon la revendication 1, dans lequel l'algorithme de fonctionnement de compresseur règle la fréquence du compresseur (11) à 0 (OFF) si la différence d'humidité (ΔH) est -6 % ou moins, à une fréquence de compresseur minimum F min si la différence d'humidité est supérieure ou égale à -5 % et inférieure ou égale à 14 %, à une première fréquence de compresseur F min+1 qui est augmentée d'un échelon par rapport à la fréquence de compresseur minimum F min si la différence d'humidité (ΔH) est supérieure ou égale à 15 % et inférieure ou égale à 24 %, à une deuxième fréquence de compresseur F min+2 qui est augmentée d'un échelon par rapport à la fréquence de compresseur F min+1 si la différence d'humidité (ΔH) est de 25 % ou plus.

5. Procédé d'opération de déshumidification sanitaire selon la revendication 1, dans lequel l'algorithme de fonctionnement de ventilateur d'extérieur comprend les étapes consistant à :
(i) comparer la fréquence du compresseur commandé de manière réglable via l'algorithme de fonctionnement de compresseur avec l'humidité à l'intérieur détectée par le capteur d'humidité à l'intérieur installé dans le climatiseur (1) ; et
(ii) régler la vitesse de rotation du ventilateur d'extérieur (22) proportionnellement à la fréquence commandée de manière réglable du compresseur (11), moyennant quoi l'opération de déshumidification à l'intérieur peut être effectuée dans une condition de confort via la fréquence commandée de manière réglable du compresseur (11).

6. Procédé d'opération de déshumidification sanitaire selon la revendication 1, dans lequel l'algorithme de fonctionnement de ventilateur d'extérieur règle la vitesse de rotation du ventilateur d'extérieur (22) à diverses valeurs correspondant à la différence d'humidité (ΔH) du compresseur, en réglant la vitesse de rotation du ventilateur d'extérieur (22) à 100 % comme une référence lorsque l'humidité à l'intérieur est d'environ 75 % ou plus et si la fréquence du compresseur (11) est réglée à F1, dans lequel,
lorsque l'humidité à l'intérieur est d'environ 75 % ou plus, la vitesse de rotation du ventilateur d'extérieur (22) est fixée à 98 % si la fréquence du compresseur est F2, la vitesse de rotation du ventilateur d'extérieur (22) est fixée à 96 % si la fréquence du compresseur est F3, la vitesse de rotation du ventilateur d'extérieur (22) est fixée à 92 % si la fréquence du compresseur est F4, et la vitesse de rotation du ventilateur d'extérieur (22) est fixée à 86 % si la fréquence du compresseur est F5 ;
lorsque l'humidité à l'intérieur est supérieure ou égale à 65 % ou inférieure ou égale à 74 %, la vitesse de rotation du ventilateur d'extérieur (22) est à 85 % si la fréquence du compresseur est F1, la vitesse de rotation du ventilateur d'extérieur (22) est à 86 % si la fréquence du compresseur est F2, la vitesse de rotation du ventilateur d'extérieur (22) est à 90 % si la fréquence du compresseur est F3, la vitesse de rotation du ventilateur d'extérieur (22) est à 85 % si la fréquence du compresseur est F4, et la vitesse de rotation du ventilateur d'extérieur (22) est à 80 % si la fréquence du compresseur est F5 ;
lorsque l'humidité à l'intérieur est supérieure ou égale à 55 % ou inférieure ou égale à 64 %, la vitesse de rotation du ventilateur d'extérieur (22) est à 70 % si la fréquence du compresseur est F1, la vitesse de rotation du ventilateur d'extérieur (22) est à 76 % si la fréquence du compresseur est F2, la vitesse de rotation du ventilateur d'extérieur (22) est à 78 % si la fréquence du compresseur est F3, et la vitesse de rotation du ventilateur d'extérieur (22) est à 75 % si la fréquence du compresseur est F5 ;
lorsque l'humidité à l'intérieur est supérieure ou égale à 45 % ou inférieure ou égale à 54 %, la vitesse de rotation du ventilateur d'extérieur (22) est à 54 % si la fréquence du compresseur est F1, la vitesse de rotation du ventilateur d'extérieur (22) est à 63 % si la fréquence du compresseur est F2, la vitesse de rotation du ventilateur d'extérieur (22) est à 71 % si la fréquence du compresseur est F3, la vitesse de rotation du ventilateur d'extérieur (22) est à 71 % si la fréquence du compresseur est F4, et la vitesse de rotation du ventilateur d'extérieur (22) est à 70 % si la fréquence du compresseur est F5 ; et
lorsque l'humidité à l'intérieur est de 44 % ou moins, la vitesse de rotation du ventilateur d'extérieur (22) est à 39 % si la fréquence du compresseur est F1, la vitesse de rotation du ventilateur d'extérieur (22) est à 51 % si la fréquence du compresseur est F2, la vitesse de rotation du ventilateur d'extérieur (22) est à 63 % si la fréquence du compresseur est F3, la vitesse de rotation du ventilateur d'extérieur (22) est à 63 % si la fréquence du compresseur est F4, et la vitesse de rotation du ventilateur d'extérieur (22) est à 63 % si la fréquence du compresseur est F5.

7. Procédé d'opération de déshumidification sanitaire selon la revendication 1, consistant à déterminer la fréquence du compresseur (11) via l'algorithme de fonctionnement de compresseur en fonction de la différence d'humidité (ΔH) entre l'humidité de consigne et l'humidité à l'intérieur.

8. Procédé d'opération de déshumidification sanitaire selon la revendication 1, consistant à régler la vitesse de rotation d'un ventilateur d'extérieur (22) via l'algorithme de fonctionnement de ventilateur d'extérieur en fonction de ladite différence de température entre la température de référence et la température à l'intérieur.

9. Procédé selon la revendication 1, consistant à fixer l'humidité de consigne de l'étape (a) par un dispositif de contrôle comprenant un dispositif de contrôle à distance.

10. Procédé selon la revendication 8, dans lequel la vitesse de rotation du ventilateur d'intérieur est réglée pour maintenir un « mode lent » durant l'opération de déshumidification sanitaire à partir d'une phase initiale dans laquelle l'opération de déshumidification sanitaire est sélectionnée et effectuée.
